# EUROPEAN PATENT SPECIFICATION

(11) **EP 4 243 157 B1**
(45) Date of publication and mention of the grant of the patent: **02.09.2026**
(21) Application number: 22895851.8
(22) Date of filing: 07.10.2022
(51) Int. Cl.: H01M 10/52, H01M 50/124, H01M 50/375, H01M 50/30, B01D 53/04, H01M 10/05, H01M 50/342, H01M 50/105, H01M 50/178, H01M 50/383

(54) **SECONDARY BATTERY INCLUDING GAS ADSORPTION MATERIAL, AND SECONDARY BATTERY MODULE**
SEKUNDÄRBATTERIE MIT GASADSORPTIONSMATERIAL UND SEKUNDÄRBATTERIEMODUL
BATTERIE SECONDAIRE COMPRENANT UN MATÉRIAU D'ADSORPTION DE GAZ, ET MODULE DE BATTERIE SECONDAIRE

(30) Priority: 16.11.2021 KR 20210157299
(43) Date of publication of application: 13.09.2023
(73) Proprietor: LG Energy Solution, Ltd., Seoul 07335 (KR)
(72) Inventor: CHA, In Young, Daejeon 34122 (KR); YU, Sung Hoon, Daejeon 34122 (KR); SUNG, Nak Gi, Daejeon 34122 (KR)
(74) Representative: Goddar, Heinz J.
(86) International application number: PCT/KR2022/015169
(87) International publication number: WO 2023/090642

(56) References cited:
- EP-A1- 2 613 400
- EP-A1- 3 593 890
- CN-A- 113 067 062
- JP-A- 2010 182 427
- JP-A- 2018 534 127
- JP-A- H07 192 775
- KR-A- 20190 042 953
- KR-B1- 102 234 218
- US-A1- 2019 022 573

## Description

### [Technical Field]

The present invention relates to a secondary battery that has a material, which adsorbs/desorbs gas depending on the temperature condition, coated on the inner side of a battery case, and it relates to a secondary battery module including the same.

This application claims the benefit of priority based on Korean Patent Application No. 10-2021-0157299, filed on November 16, 2021.

### [Background Technology of the Invention]

Recently, as the technology development and demand for mobile devices increases, and as electric vehicles (EV) become more and more popularized, the demand for a battery as an energy source has been sharply increasing. Accordingly, many researches related to the battery are being done to meet those various demands.

Typically, in terms of the shape of the battery, there is a high demand for a prismatic secondary battery and a pouch-type secondary battery which can be applied to appliances such as a mobile phone in a thin layer, and in terms of the material of the battery, there is a high demand for lithium secondary batteries such as a lithium-ion battery and a lithium-ion polymer battery which have advantages such as high energy density, high discharge voltage, high output stability, etc.

However, despite these advantages, the lithium secondary battery has drawbacks in terms of stability. Specifically, gas is generated when electrolyte reacts during first charging, aging, and charge/discharge right after electrolyte gets injected into a battery assembly. And the gas generated causes problems such as decrease in capacity and lithium deposition by being trapped inside the battery.

In addition, when large amount of gas gets produced, the pressure between the case and the battery assembly, also known as the dead space, increases, making the gas trapped inside the battery assembly hard to be emitted to the dead space, and the battery performance may be degenerated due to the trapped gas. Moreover, it increases the internal pressure of the battery and causes deformation in a cylindrical or a prismatic battery case, and serious problems such as explosion of a secondary battery may also occur.

In order to solve the above-mentioned problems, means of gas emission are often formed on the case in order to lower the internal pressure by emitting gas generated inside the secondary battery case to the outside. However, because the means of gas emission rupture in relatively high critical temperature and because the internal pressure of the battery slowly increases, when one among the multiple individual secondary batteries within the secondary battery module shows abnormal increase in temperature, heat is transferred to the adjacent secondary battery, and it can either cause a normal secondary battery to stop working due to series of rupture in means of gas emission, or cause decrease in the battery performance.

CN 113067062 A discloses a gas self-adsorption lithium ion battery shell and a preparation method thereof. The battery shell can accommodate a positive electrode, a negative electrode, a diaphragm and an electrolyte, and comprises a shell, a gas adsorption active substance layer and a substance layer with oleophobic, breathable and corrosion-resistant properties; the gas adsorptive active substance layer is attached to the inner side of the shell, and the substance layer with oleophobic, breathable and corrosion-resistant properties is attached to the surface of the gas adsorptive active substance layer. It is disclosed that according to the gas self-adsorption lithium-ion battery shell, a layer of oleophobic, breathable and corrosion-resistant film is attached to the surface of the gas adsorption layer, so the problem that a gas adsorption active substance adsorbs an electrolyte can be solved. According to the disclosure, the content of the gas adsorption active substance is increased by making the hole groove in the inner side of the battery shell.

EP 3 593 890 A1 discloses an adsorption assembly and a battery. The adsorption assembly includes: a housing including a gas permeable portion; and an adsorbent encapsulated by the housing. It is disclosed that the adsorption assembly can effectively isolate the adsorbent from the external environment by providing the housing, thereby preventing the adsorption performance of the adsorbent from being affected, and the housing includes a gas permeable portion, which makes the produced gas in the external environment enter the housing and be effectively adsorbed by the adsorbent. According to the disclosure, in particular, when the adsorbent is used for a battery, especially a soft pack battery, the gas produced inside the battery can be effectively adsorbed to prevent liquid leakage of the battery seal caused by breakage of the battery seal by gas, improving reliability and safety of the battery and extending lifetime of the battery.

KR 102 234 218 B1 discloses a battery case in which an electrode assembly having a structure in which a separator is interposed between a positive electrode and a negative electrode is accommodated together with an electrolyte, wherein a gas adsorption layer is formed on an inner surface of the battery case, and the gas adsorption layer includes a gas adsorbent material layer that adsorbs gas generated inside the battery and a barrier layer formed on an outer surface of the gas adsorbent material layer so as to prevent the gas adsorbent material layer from being exposed to the outside.

EP 2 613 400 A1 discloses a secondary battery provided with a case in which positive electrode and negative electrode are sealed together with electrolyte, and an explosion prevention valve for allowing escape of high-pressure gas present at the interior of the case when pressure within the case rises; and further provides gas absorber for absorbing high-pressure gas. The gas absorber includes gas-absorbent material and a capsule, which comprises hot-melt material, and is provided within the case, this capsule including, at the interior thereof, gas-absorbent material. Furthermore, gas absorber, which may be provided outside the case, may include gas-absorbent material; cartridge case which houses, at the interior thereof, gas-absorbent material; gas inlet valve for causing high-pressure gas to flow thereinto; and gas outlet valve for causing high-pressure gas to flow out therefrom.

### [Description of the Invention]

### [Technical Problem]

The present invention is invented to solve above-mentioned problems, and it is directed to provide a secondary battery and a secondary battery module comprising the same that adsorbs gas inside the battery in a normal operating temperature, and that can vent gas to the outside of the case by quickly emitting gas to increase the internal pressure and quickly reaching a pressure critical point when abnormal increase in the temperature occurs.

The present invention is also directed to provide a secondary battery that adsorbs gas generated in a normal operating temperature of a secondary battery, inhibits deformation in the battery case by lowering the pressure inside the battery case, and does not degrade the battery performance.

### [Technical Solution]

To solve the above-described problem, the present invention, in one embodiment, provides a secondary battery that includes an electrode assembly; and
a case where the electrode assembly gets inserted, and
wherein the case has a coating layer on the inner side that contains a gas adsorbing material that adsorbs or desorbs internal gas depending on the temperature inside the case, and wherein the gas adsorbing material comprises a diamine compound containing one or more metals selected from the group consisting of magnesium, manganese, iron, zinc, and cobalt.

Here, the gas adsorbing material may have a critical temperature between 70 and 150°C, and it may adsorb internal gas below the critical temperature and may desorb internal gas at or above the critical temperature.

Such gas adsorbing material includes a diamine compound that includes one or more metals selected from the group consisting of magnesium, manganese, iron, zinc, and cobalt, and the diamine compound may comprise one or more selected from the group consisting of mmen-Mg2(dobpdc), mmen-Mn2(dobpdc), mmen-Fe2(dobpdc), mmen-Zn2(dobpdc), and mmen-Co2(dobpdc).

In addition, the gas adsorbing material may include one or more selected from the group consisting of carbon fiber, activated carbon, zeolite, alumina, silica, bauxite, and molecular sieves.

Furthermore, the coating layer may include a first gas adsorbing material that has a critical temperature of 70 to 110°C; a second gas adsorbing material that has a critical temperature of 110 to 140°C; and a binder.

In addition, the first gas adsorbing material may be included in an amount of 60 to 80wt% and the second gas adsorbing material may be included in an amount of 19 to 50 wt% with respect to the total weight of the coating layer.

Additionally, the coating layer may have an average thickness of 50µm to 500µm.

In addition, the coating layer may have a pattern structure with an area ratio of 50 to 90% with respect to the total surface area of the case.

Moreover, the internal gas may include one or more selected from the group consisting of oxygen (O₂), hydrogen (H₂), ethylene (C₂H₄), acetylene (C₂H₂), propylene (C₃H₆), carbon monoxide (CO), carbon dioxide (CO₂), methane (CH₄), ethane (CH₃CH₃), propane (CH₃CH₂CH₃), nitrogen monoxide (NO) and nitrogen dioxide (NO₂).

In addition, the secondary battery may also include a means of gas emission venting under pressure.

Furthermore, in one embodiment, the present invention provides a secondary battery module that includes the secondary battery according to the present invention described above.

### [Advantageous Effects]

The secondary battery according to the present invention, by having a gas adsorbing material as further specified above that adsorbs gas in a normal operating temperature on the basis of a critical temperature, and desorbs internal gas adsorbed in a high temperature coated on the inner side of the case, it is possible to reach an internal pressure critical point in a short time when exposed to an abnormally high temperature, thus it can better improve the safety for heat transfer and fire in the battery because it can hasten the internal gas emission time point.

In addition, the secondary battery inhibits deformation of the battery case by adsorbing gas generated in a normal operating temperature range and lowering the pressure inside the battery case, and it has an excellent effect in not degrading the battery performance.

### [Brief Description of the Drawings]

FIG. 1 is a cross-sectional view illustrating the structure of a pouch-type secondary battery according to an exemplary embodiment of the present invention.
FIG. 2 is a cross-sectional view illustrating the structure of a pouch-type secondary battery according to another exemplary embodiment of the present invention.
FIG. 3 is a graph(a) representing CO₂ adsorption isotherm of a general CO₂ adsorbent, and a graph(b) representing a CO₂ adsorption isotherm of an adsorbent of mmen-M2(dobpdc).

### [Best Mode for Carrying Out the invention]

Hereinafter, while it will be described by referring to the drawings according to the embodiments of the present invention, they are only for facilitating the understanding of the present invention, and the category of the present invention is not limited to specific embodiments.

### Secondary Battery

The present invention, in one embodiment, provides a secondary battery that includes
an electrode assembly; and
a case where the electrode assembly gets inserted, and
wherein the case has a coating layer on the inner side that contains a gas adsorbing material that adsorbs or desorbs internal gas depending on the temperature inside the case, and
wherein the gas adsorbing material comprises a diamine compound containing one or more metals selected from the group consisting of magnesium, manganese, iron, zinc, and cobalt.

The secondary battery according to the present invention includes an electrode assembly, and the electrode assembly has a shape inserted into a case. Here, while the case can be widely applied depending on the shape, structure, and manufacturing method of the secondary battery, it can specifically be applied to a cylindrical, prismatic, pouch-type, etc. In one example, the case mentioned above may be a pouch-type case.

In addition, the case may have a coating layer on its inner side containing a gas adsorbing material that adsorbs or desorbs internal gas generated during charge/discharge of the secondary battery. Specifically, the case may include a coating layer in a mixed form of a gas adsorbing material and a binder that fixes it on the inner surface where an electrode assembly is being placed.

Here, the gas adsorbing material contained in the coating layer has a critical temperature of 70 to 150°C, and it may adsorb internal gas below the critical temperature and may desorb internal gas at or above the critical temperature. That is, the gas adsorbing material lowers the pressure inside the case by adsorbing internal gas generated due to charge/discharge of the battery in a normal operating temperature which is at or below the critical temperature, and when heat gets generated above the critical temperature due to abnormal operation of the battery, it can quickly vent open the internal gas before thermal runaway by desorbing the adsorbed gas and increasing the gas pressure inside the case in a short time or in an instant.

For this purpose, the gas adsorbing material may have a critical temperature of 70 to 150°C, specifically between 70~130°C; 70~110°C; 70~90°C; 90~120°C; 100~110°C; 110~125°C; or 120~140°C. The present invention adsorbs internal gas in a normal operation temperature and effectively desorbs gas in an abnormal operation temperature, for example, in heating condition, to increase internal pressure in a short time or in an instant, by controlling the critical temperature of gas adsorbing material to the above range.

While such gas adsorbing material may be applied without being limited so long as it is adsorbing or desorbing gas on the basis of a critical temperature between 70 and 150°C, it specifically comprises a diamine compound including one or more metals selected from the group consisting of magnesium, manganese, iron, zinc, and cobalt. Besides the diamine compounds, materials that collect gas by having a porous structure such as carbon fiber, activated carbon, zeolite, alumina, silica, bauxite, and molecular sieves, etc. can be used alone or in combination.

In one example, the gas adsorbing material may include the diamine compound with a critical temperature between 70 and 90°C including one or more selected from the group consisting of mmen-Mg₂(dobpdc), mmen-Mn₂(dobpdc), mmen-Fe₂(dobpdc), mmen-Zn₂(dobpdc), and mmen-Co₂(dobpdc). Here, "mmen" means N,N-diethylethylenediamine, and "Dobpdc" means 4,4'-dioxidobiphenyl-3,3'-dicarboxylate.

The diamine compound is an uncoordinated amine compound of mmen molecule, eliminating acidic protons from the metal binding amine of neighboring mmen molecule, and phase transition occurs during gas (CO₂, for example) adsorption where carbamate that has opposite cation to that of ammonium is formed. If an appropriate temperature and pressure are applied, rearrangement of carbamate becomes possible, where M-N bond breaks and M-O bond is formed. The ion-pairing interaction elongates the mmen molecule and makes M-N bond unstable, stimulating gas (CO₂, for example) insertion into the next metallic part. Such synergistic effect is extended until a complete one-dimensional ammonium-carbamate chain is formed, and large amount of gas (CO₂, for example) is adsorbed due to the synergistic effect, causing the adsorption isotherm to appear in a steep vertical form.

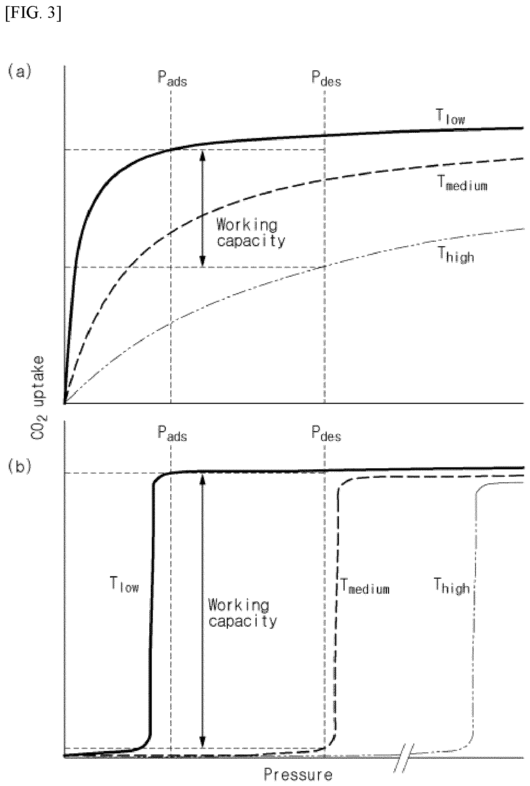

In contrast, if a higher temperature and pressure (the temperature of T_{medium} or T_{hig h} and the pressure of P_{des} in FIG. 3) are applied to the mmen-M₂(dobpdc) on which th e gas (CO₂, for example) is adsorbed, the gas adsorption mechanism from the above happens the other way around, where M-O bond breaks and M-N bond gets formed, making the gas (CO₂, for example) to be desorbed and destabilizing surrounding M-O bonds, and the synergistic effect that stimulates separation of the gas (CO₂, for example) in the next metallic part occurs. This causes large amount of gas (CO₂, for example) to be rapidly desorbed.

Meanwhile, in mmen-M₂(dobpdc), the metal-amine bonding strength varies depending on the type of divalent metal M, causing the location of the adsorption stage and the desorption stage to be different, and the location of the adsorption stage and the desorption stage given the same temperature changes in the order of Mg<Mn<Fe<Zn<Co. That is, internal gas is adsorbed when the mmen-M₂(dobpdc) is lower than the critical temperature and internal gas is emitted when the mmen-M₂(dobpdc) is higher than the critical temperature, and the critical temperature where the adsorption and desorption of internal gas is switched can be controlled by selecting an appropriate M.

The present invention uses the gas (CO₂, for example) adsorption and desorption properties of mmen-M₂(dobpdc), and the internal gas such as CO₂ that is generated during the normal charge-discharge process of the secondary battery increases the adsorption rate using a gas adsorbing material of the mmen-M₂(dobpdc). And when an abnormal reaction such as temperature rise due to a short circuit in the secondary battery occurs, it sharply raises the internal pressure of the secondary battery case by rapidly desorbing internal gas that has been adsorbed into the gas adsorbing material at temperature at or above the critical temperature, causing the gas to be emitted by rupturing the rupture element of the means of gas emission. Accordingly, this can prevent a series of heat transfer to adjacent secondary batteries by quickly disabling the secondary battery that has shown an abnormal reaction within the secondary battery module.

In another example, the gas adsorbing material may be a zeolite, activated alumina, and/or silica gel that has a critical temperature between 110 and 140°C. While zeolite, activated alumina, and/or silica gel contain the same chemical components, their critical temperature may vary due to a post-treatment process such as a heat treatment, a surface treatment, and a surface coating, as well as due to processing condition in manufacturing or doping within the material. And the critical temperature may be appropriately controlled in accordance with the internal temperature range predicted based on the operating condition of the secondary battery.

In addition, while the coating layer contains a gas adsorbing material, it may contain two or more gas adsorbing materials with different critical temperature. When the coating layer contains two or more gas adsorbing materials with different critical temperature, internal gas can be easily controlled to a predetermined temperature range for it to be emitted.

Specifically, the coating layer may include a first gas adsorbing material that has a critical temperature between 70 and 110°C; a second gas adsorbing material that has a critical temperature between 110 and 140°C; and a binder.

In one example, the coating layer may include a first gas adsorbing material that has a critical temperature between 80 and 95°C; a second gas adsorbing material that has a critical temperature between 115 and 130°C; and a binder.

In another example, the coating layer may include a first gas adsorbing material that has a critical temperature between 100 and 110°C; a second gas adsorbing material that has a critical temperature between 110 and 120°C; and a binder.

Here, while the first gas adsorbing material adsorbs the gas generated during normal operation of the secondary battery and/or from internal temperature condition below the critical temperature and reduces the internal pressure, if the internal temperature exceeds the critical temperature, 70~110°C in specific, due to an abnormal operation of the secondary battery, it may substantially increase the internal pressure by desorbing the adsorbed gas.

In addition, because the second gas adsorbing material has a higher critical temperature compared to that of the first gas adsorbing material, it can prevent the damage in an electrode assembly inserted into the secondary battery by partially adsorbing gas desorbed from the first gas adsorbing material when the internal temperature exceeds the critical temperature of the first gas adsorbing material due to an abnormal operation of the secondary battery. It may also increase the internal pressure of the secondary battery in a short time or in an instant by desorbing the adsorbed gas before heat transfer occurs to the secondary battery adjacent to the relevant secondary battery inside the secondary battery. For this purpose, the first gas adsorbing material may have a critical temperature that is lower than the temperature where heat transfer of the secondary battery occurs.

Moreover, the first and the second adsorbing materials may be included into the coating layer with a certain weight ratio. Specifically, the first gas adsorbing material and the second gas adsorbing material may each be comprised at 60 to 80wt% and 19 to 50% with respect to the total weight of the coating layer, and more specifically they may each be comprised at 65 to 75wt% and 24 to 40wt%; or 62 to 70wt% and 29 to 35wt% with respect to the total weight.

The present invention, by controlling the content of the first and the second gas adsorbing material contained in the coating layer to the above range, can keep the internal pressure of the battery low in a normal operating temperature of the battery. When the internal temperature exceeds 120°C due to an abnormal operation of the battery, more specifically under temperature condition at or above 140°C, it can desorb internal gas and momentarily increase the internal pressure before thermal runaway of the battery occurs. This allows internal gas to be emitted outside the case in a lower temperature condition, better improving the safety of the battery.

In addition, although the coating layer is formed on the inner side of the case, it may be formed on all sides of the inner part of the case to surround the electrode assembly inserted into the case, and in some cases, a pattern structure can be formed in order to increase the surface area. The coating layer may be formed on all sides of the inner part of the case in a form surrounding the electrode assembly in order to adsorb gas generated from a side reaction between the active materials of the electrode assembly and/or between the active material and electrolyte during charge-discharge of the battery; and while it may be formed on all sides of the inner part of the case, it is formed with a pattern structure so that it can more effectively adsorb internal gas of the battery by increasing the surface area.

Here, if the coating layer has a pattern structure, the coating layer may be formed with an area ratio between 50 and 90% with respect to the total surface area of the case, specifically formed with an area ratio between 60 and 90%; 70 and 90%; 75 and 90%; or 70 and 85% with respect to the total surface area of the case.

In addition, the coating layer may have an average thickness between 50µm and 500µm, specifically between 50µm and 400µm; 50µm and 300µm; 50µm and 200µm; 100µm and 300µm; 150µm and 300µm; or 80µm and 150µm.

The present invention may prevent the energy density from decreasing, and maximize the gas adsorption rate by controlling the area ratio and average thickness of the coating layer to the above range.

Meanwhile, the internal gas being generated from the inside of the battery during the charge-discharge of the secondary battery is originated from either the decomposition of a positive electrode, an negative electrode, and/or a separation membrane that forms the electrode assembly or the decomposition of an electrolyte, and its type may not be particularly limited.

Specifically, the internal gas may comprise one or more selected from the group consisting of oxygen (O₂), hydrogen (H₂), ethylene (C₂H₄), acetylene (C₂H₂), propylene (C₃H₆), carbon monoxide (CO), carbon dioxide (CO₂), methane (CH₄), ethane (CH₃CH₃), propane (CH₃CH₂CH₃), nitrogen monoxide (NO) and nitrogen dioxide (NO₂).

In one example, the internal gas may be a carbon monoxide (CO) and/or carbon dioxide (CO₂). If heat gets generated due to an abnormal operation during the charge-discharge of the battery, a considerable amount of carbon monoxide (CO) and/or carbon dioxide (CO₂) gets formed by the electrolyte decomposition. The present invention may effectively control internal pressure due to gas by adsorbing/desorbing carbon monoxide (CO) and/or carbon dioxide (CO₂) at a high rate.

In addition, the secondary battery according to the present invention may also include a means of gas emission in order to emit gas to the case where the electrode assembly is inserted.

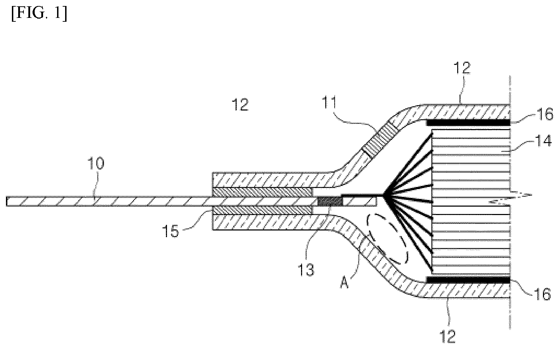

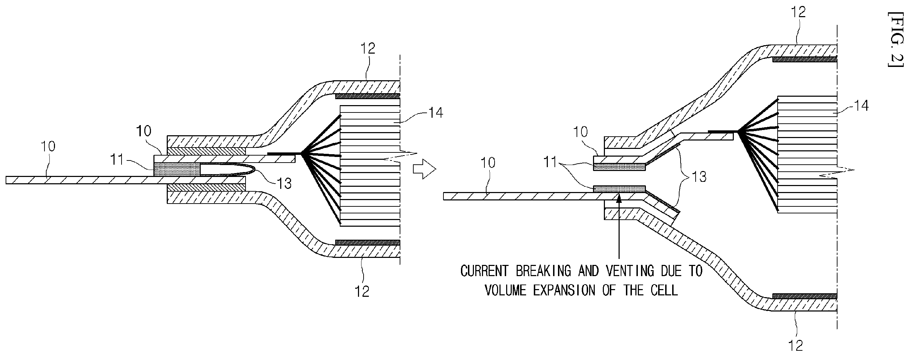

FIG.1 and FIG. 2 are cross-sectional views illustrating the structure of the secondary battery according to present invention, and the structure of the secondary battery of the present invention is composed of an electrode lead 10 and a case 12 accommodating an electrode assembly 14, where the case has a coating layer 16 on its inner side. The electrode lead 10 is connected to a case 12 via a sealing part 15, and it is partially exposed to the outside of the case 12.

Here, the case 12 may additionally include a means of gas emission 11 that vents internal gas when the internal pressure steeply increases by internal gas being desorbed from the coating layer 16 due to an abnormal operation of the battery.

Specifically, as illustrated in FIG. 1, the means of gas emission can be formed on one side of the case 12, or, as illustrated in FIG. 2, can be formed between the electrode lead 10 and an electrode tab 10'. Internal gas such as CO, CO₂, etc. can be formed due to temperature rise when an abnormal reaction occurs during the charge-discharge process of the secondary battery. As a result, the internal pressure of the secondary battery case 12 rises, causing the case deformation and safety related issues such as fire may occur. The means of gas emission 11 is directed to solve the above-mentioned issues, and while it is not limited to a specific form, the means of gas emission 11 may include: an opening part (not illustrated) that connects the inside and outside of the secondary battery case and a rupturing part (not illustrated) that seals the inside of the secondary battery case and gets ruptured when the internal pressure of the secondary battery case increases.

Additionally, the secondary battery according to one embodiment of the present invention may contain a current blocking part. The current blocking part may be a fuse that is short-circuited when temperature rises, and may be formed in a structure that is separated by an increased pressure due to internal gas generation. The present invention uses the sudden desorption of the internal gas by a gas adsorbing material, and it is desirable for the current blocking part to have a structure that blocks the current by being separated due to pressure.

In other words, the secondary battery according to the present invention desorbs gas that has been adsorbed to the gas adsorbing material when temperature rises due to an abnormal reaction inside the battery; when the pressure inside the secondary battery case 12 exceeds above a certain level, the means of gas emission 11 gets vented, emitting activated gas, gas generated by the charge-discharge of the battery, and/or gas generated by the battery being exposed to a high temperature; and the secondary battery stops working due to a current blocking element 13.

### Secondary Battery Module

Furthermore, the present invention provides a secondary battery module that includes the secondary battery according to the present invention stated above.

The secondary battery module according to the present invention includes the secondary battery according to the present invention that has a coating layer containing a gas adsorbing material that adsorbs or desorbs gas based on the critical temperature on the inner side of the case.

Accordingly, the secondary battery module adsorbs internal gas at a normal operating temperature of the battery, and desorbs the adsorbed internal gas when heat gets generated due to an abnormal operation of the battery, allowing it to reach the internal pressure critical point of the battery in a short time and easily control the internal gas emission time point, which is an excellent advantage in terms of safety.

Because the secondary battery module according to the present invention has excellent safety when exposed to high temperature by having a composition that has the secondary battery of the present invention, it can be used as a power source for medium and large size devices which require high-temperature safety, long cycle properties, high-rate properties, etc. Specific examples of medium and large size devices may include a power tool that moves by being powered by an electrical motor; electric cars including Electric Vehicle (EV), Hybrid Electric Vehicle (HEV), Plug-in Hybrid Electric Vehicle (PHEV), etc.; electric two-wheel vehicles including an E-bike and an Escooter; an electric golf cart; and a power storage system. More specifically, it can include Hybrid Electric Vehicle (HEV), but it is not limited thereto.

### [Mode for Carrying Out the invention]

Hereinafter, the present invention will be described in further detail with reference to examples and an experimental example.

However, the following examples and an experimental example merely illustrate the present invention, and the content of the present invention is not limited to the following examples and an experimental example.

### Examples 1~4. Manufacture of Secondary Battery

A Secondary battery was manufactured by preparing an electrode assembly that has a positive electrode, a negative electrode, and a separation membrane interposed between the positive electrode and the negative electrode, inserting the prepared assembly into a pouch-type case, injecting an electrolyte, and sealing the case.

Here, the case with a means of gas emission on one side as illustrated in FIG. 1 and a coating layer (an average thickness: approx. 50µm) on the inner side was used. While the coating layer contained 97wt% of a gas adsorbing material and 3wt% of a binder, a first gas adsorbing material (a critical temperature: approx. 75-80°C), a second gas adsorbing material (a critical temperature: approx. 125-130°C), and the area ratio were controlled as illustrated in Table 1 below.

**[Table 1]**

| | First Gas adsorbing Material | | Second Gas Adsorbing Material | | Area Ratio |
|---|---|---|---|---|---|
| | Component | Content | Component | Content | |
| Example 1 | mmen-M₂(dobpdc) | 97wt% | - | - | 100% |
| Example 2 | mmen-M₂(dobpdc) | 97wt% | - | - | 80% (striped structure) |
| Example 3 (Comparative Example) | - | - | Activated Alumina | 97wt% | 80% (striped structure) |
| Example 4 | mmen-M₂(dobpdc) | 65wt% | Activated Alumina | 32wt% | 80% (striped structure) |

### Comparative Example 1. Manufacture of Secondary Battery

Besides using a case that does not have a coating layer formed on the inner side, the same method as in Example 1 was performed to manufacture a secondary battery.

### Experimental Example.

The time that takes for internal gas to be emitted (that is, vented) from the means of gas emission of each secondary battery and the internal temperature of the secondary battery when internal gas is being emitted were measured by performing overcharging of secondary batteries manufactured in the Examples and Comparative Example.

Specifically, a temperature sensor was introduced to the inside of the secondary batteries manufactured in the Examples and Comparative Example, and after charging the battery to 4.2V, it was overcharged with a constant current of 0.05C until it reached 10V. In the overcharging process, the internal temperature of the battery was measured when the means of gas emission emitted the internal gas. The result is shown in Table 2 below.

**[Table 2]**

| | Internal Temperature During Venting |
|---|---|
| Example 1 | 95°C |
| Example 2 | 93°C |
| Example 3 (Comparative Example) | 140°C |
| Example 4 | 115°C |
| Comparative Example 1 | Ignition occurred before venting |

As shown in Table. 2 above, the secondary battery according to the present invention can have its safety improved by having a coating layer containing a gas adsorbing material that adsorbs and desorbs internal gas depending on the critical temperature on the inner side of the case.

Specifically, the secondary battery of the examples can easily control the internal pressure of the battery when exposed to a high temperature due to an abnormal operation of the battery by having a coating layer containing a gas adsorbing material formed on the inner side of the case, and it can perform the internal gas emission before the thermal runaway of the battery gets induced.

On the other hand, in the secondary battery of comparative example that does not have a coating layer formed, it has been confirmed that venting is proceeded after the thermal runaway of the battery.

From these results, it can be known that the secondary battery according to the present invention may further enhance the safety in terms of battery heat transfer and fire by having a gas adsorbing material that adsorbing internal gas in a normal operating temperature based on a critical temperature and desorbs the adsorbed internal gas in a high temperature coated on the inner side of the case.

The technical scope of the present invention is not limited to the content described in the detailed description of the specification, but should be defined by the claims.

## Claims

1. A secondary battery, comprising:
an electrode assembly; and
a case where the electrode assembly is inserted, and
wherein the case has a coating layer, on the inner side, containing a gas adsorbing material that adsorbs or desorbs internal gas depending on the temperature inside the case, and
wherein the gas adsorbing material comprises a diamine compound containing one or more metals selected from the group consisting of magnesium, manganese, iron, zinc, and cobalt.

2. The secondary battery of claim 1, wherein the gas adsorbing material has a critical temperature between 70 and 150 °C, and it adsorbs internal gas below the critical temperature and desorbs internal gas at or above the critical temperature.

3. The secondary battery of claim 1, wherein the diamine compound comprises one or more selected from the group consisting of mmen-Mg₂(dobpdc), mmen-Mn₂(dobpdc), mmen-Fe₂(dobpdc), mmen-Zn₂(dobpdc), and mmen-Co₂(dobpdc), wherein "mmen" is N,N-diethylethylenediamine and "dobpdc" is 4,4' -dioxidobiphenyl-3,3'-dicarboxylate.

4. The secondary battery of claim 1, wherein the gas adsorbing material comprises one or more selected from the group consisting of carbon fiber, activated carbon, zeolite, alumina, silica, bauxite, and molecular sieves.

5. The secondary battery of claim 1, wherein the coating layer, comprises:
a first gas adsorbing material that has a critical temperature between 70 and 110 °C;
a second gas adsorbing material that has a critical temperature between 110 and 140 °C;
and a binder.

6. The secondary battery of claim 5, wherein the first gas adsorbing material is comprised in an amount of 60 to 80 wt% and the second gas adsorbing material is comprised in an amount of 19 to 50 wt% with respect to the total weight of the coating layer.

7. The secondary battery of claim 1, wherein the coating layer has an average thickness of 50 µm to 500 µm.

8. The secondary battery of claim 1, wherein the coating layer has a pattern structure with an area ratio of 50 to 90 % with respect to the total surface area of the case.

9. The secondary battery of claim 1, wherein the internal gas comprises one or more selected from the group consisting of oxygen (O₂), hydrogen (H₂), ethylene (C₂H₄), acetylene (C₂H₂), propylene (C₃H₆), carbon monoxide (CO), carbon dioxide (CO₂), methane (CH₄), ethane (CH₃CH₃), propane (CH₃CH₂CH₃), nitrogen monoxide (NO) and nitrogen dioxide (NO₂).

10. The secondary battery of claim 1, wherein the secondary battery further comprises a means of gas emission venting under pressure.

11. A secondary battery module that comprises the secondary battery of claim 1.

## Patentansprüche

1. Sekundärbatterie, umfassend:
eine Elektrodenanordnung; und
ein Gehäuse, in das die Elektrodenanordnung eingesetzt ist, und
wobei das Gehäuse eine Beschichtungsschicht auf der Innenseite aufweist, die ein gasadsorbierendes Material enthält, das in Abhängigkeit von der Temperatur im Inneren des Gehäuses internes Gas adsorbiert oder desorbiert, und
wobei das gasadsorbierende Material eine Diaminverbindung umfasst, die ein oder mehrere Metalle enthält, die aus der Gruppe ausgewählt sind, die aus Magnesium, Mangan, Eisen, Zink und Kobalt besteht.

2. Sekundärbatterie nach Anspruch 1, wobei das gasadsorbierende Material eine kritische Temperatur zwischen 70 und 150 °C aufweist und internes Gas unterhalb der kritischen Temperatur adsorbiert und internes Gas bei oder oberhalb der kritischen Temperatur desorbiert.

3. Sekundärbatterie nach Anspruch 1, wobei die Diaminverbindung eine oder mehrere Verbindungen umfasst, die aus der Gruppe ausgewählt sind, die aus mmen-Mg₂(dobpdc), mmen-Mn₂(dobpdc), mmen-Fe₂(dobpdc), mmen-Zn₂(dobpdc) und mmen-Co₂(dobpdc) besteht, wobei "mmen" N,N-Diethylethylendiamin ist und "dobpdc" 4,4'-Dioxidobiphenyl-3,3'-dicarboxylat ist.

4. Sekundärbatterie nach Anspruch 1, wobei das gasadsorbierende Material eine oder mehrere Verbindungen umfasst, die aus der Gruppe ausgewählt sind, die aus Kohlenstofffaser, Aktivkohle, Zeolith, Aluminiumoxid, Siliciumdioxid, Bauxit und Molekularsieben besteht.

5. Sekundärbatterie nach Anspruch 1, wobei die Beschichtungsschicht umfasst:
ein erstes gasadsorbierendes Material, das eine kritische Temperatur zwischen 70 und 110 °C aufweist;
ein zweites gasadsorbierendes Material, das eine kritische Temperatur zwischen 110 und 140 °C aufweist;
und ein Bindemittel.

6. Sekundärbatterie nach Anspruch 5, wobei das erste gasadsorbierende Material in einer Menge von 60 bis 80 Gew.-% enthalten ist und das zweite gasadsorbierende Material in einer Menge von 19 bis 50 Gew.-% enthalten ist, bezogen auf das Gesamtgewicht der Beschichtungsschicht.

7. Sekundärbatterie nach Anspruch 1, wobei die Beschichtungsschicht eine durchschnittliche Dicke von 50 µm bis 500 µm aufweist.

8. Sekundärbatterie nach Anspruch 1, wobei die Beschichtungsschicht eine Musterstruktur mit einem Flächenverhältnis von 50 bis 90 %, bezogen auf die Gesamtoberfläche des Gehäuses, aufweist.

9. Sekundärbatterie nach Anspruch 1, wobei das interne Gas eine oder mehrere Verbindungen umfasst, die aus der Gruppe ausgewählt sind, die aus Sauerstoff (O₂), Wasserstoff (H₂), Ethylen (C₂H₄), Acetylen (C₂H₂), Propylen (C₃H₆), Kohlenmonoxid (CO), Kohlendioxid (CO₂), Methan (CH₄), Ethan (CH₃CH₃), Propan (CH₃CH₂CH₃), Stickstoffmonoxid (NO) und Stickstoffdioxid (NO₂) besteht.

10. Sekundärbatterie nach Anspruch 1, wobei die Sekundärbatterie ferner ein Mittel zur Gasemissionsentlüftung unter Druck umfasst.

11. Sekundärbatteriemodul, das die Sekundärbatterie nach Anspruch 1 umfasst.

## Revendications

1. Batterie rechargeable, comprenant :
un ensemble électrode ; et
un boîtier où l'ensemble électrode est introduit, et
dans laquelle le boîtier a une couche de revêtement, sur le côté interne, contenant un matériau d'adsorption de gaz qui adsorbe ou désorbe un gaz interne en fonction de la température à l'intérieur du boîtier, et
dans laquelle le matériau d'adsorption de gaz comprend un composé de diamine contenant un ou plusieurs métaux sélectionnés dans le groupe constitué de magnésium, manganèse, fer, zinc et cobalt.

2. Batterie rechargeable selon la revendication 1, dans laquelle le matériau d'adsorption de gaz a une température critique entre 70 et 150°C, et il adsorbe un gaz interne au-dessous de la température critique et désorbe un gaz interne à ou au-dessus de la température critique.

3. Batterie rechargeable selon la revendication 1, dans laquelle le composé de diamine comprend un ou plusieurs éléments sélectionnés dans le groupe constitué de mmen-Mg₂(dobpdc), mmen-Mn₂(dobpdc), mmen-Fe₂(dobpdc), mmen-Zn₂(dobpdc), et mmen-Co₂(dobpdc), dans laquelle "mmen" est N,N-diéthyléthylènediamine et "dobpdc" est 4,4' - dioxydobiphényl-3,3'-dicarboxylate.

4. Batterie rechargeable selon la revendication 1, dans laquelle le matériau d'adsorption de gaz comprend un ou plusieurs éléments sélectionnés dans le groupe constitué de fibre de carbone, carbone actif, zéolite, alumine, silice, bauxite et tamis moléculaires.

5. Batterie rechargeable selon la revendication 1, dans laquelle la couche de revêtement, comprend :
un premier matériau d'adsorption de gaz qui a une température critique entre 70 et 110°C ;
un deuxième matériau d'adsorption de gaz qui a une température critique entre 110 et 140°C ; et
un liant.

6. Batterie rechargeable selon la revendication 5, dans laquelle le premier matériau d'adsorption de gaz est compris dans une quantité de 60 à 80 % en poids et le deuxième matériau d'adsorption de gaz est compris dans une quantité de 19 à 50 % en poids du poids total de la couche de revêtement.

7. Batterie rechargeable selon la revendication 1, dans laquelle la couche de revêtement a une épaisseur moyenne de 50 µm à 500 µm.

8. Batterie rechargeable selon la revendication 1, dans laquelle la couche de revêtement a une structure de motif ayant un rapport de superficie de 50 à 90 % de la superficie totale du boîtier.

9. Batterie rechargeable selon la revendication 1, dans laquelle le gaz interne comprend un ou plusieurs éléments sélectionnés dans le groupe constitué d'oxygène (O₂), hydrogène (H₂), éthylène (C₂H₄), acétylène (C₂H₂), propylène (C₃H₆), monoxyde de carbone (CO), dioxyde de carbone (CO₂), méthane (CH₄), éthane (CH₃CH₃), propane (CH₃CH₂CH₃), monoxyde d'azote (NO) et dioxyde d'azote (NO₂).

10. Batterie rechargeable selon la revendication 1, dans laquelle la batterie rechargeable comprend en outre un moyen d'évacuation d'émission de gaz sous pression.

11. Module de batterie rechargeable qui comprend la batterie rechargeable selon la revendication 1.
